# EUROPEAN PATENT SPECIFICATION

(11) **EP 3 548 376 B1**
(45) Date of publication and mention of the grant of the patent: **09.11.2022**
(21) Application number: 17811519.2
(22) Date of filing: 30.11.2017
(51) Int. Cl.: B62M 7/12, F16D 11/14, F16D 41/04, F16D 23/12

(54) **SYNCHRONIZED TRANSMISSION, IN PARTICULAR FOR MOTORCYCLES**
SYNCHRONISIERTE ÜBERTRAGUNG, INSBESONDERE FÜR MOTORRÄDER
TRANSMISSION SYNCHRONISÉE, EN PARTICULIER POUR MOTOCYCLETTES

(30) Priority: 01.12.2016 IT 201600122165
(43) Date of publication of application: 09.10.2019
(73) Proprietor: PIAGGIO & C. S.p.A., 56025 Pontedera (Pisa) (IT)
(72) Inventor: NUTI, Luca, 56025 Pontedera (PI) (IT); MARIOTTI, Walter, 56025 Pontedera (PI) (IT)
(74) Representative: Pallini Gervasi, Diego
(86) International application number: PCT/EP2017/080991
(87) International publication number: WO 2018/100067

(56) References cited:
- US-A- 2 684 140
- US-A- 4 505 352
- US-A1- 2016 017 930

## Description

The present invention relates to a synchronized transmission which can be used aboard a vehicle, wherein the crankshaft actuated by the engine e the driven shaft, connected to a rear wheel, are substantially parallel therebetween and parallel to a primary shaft which is kinematically connected to the crankshaft in a synchronous way, for example by means of pulleys assembled on the respective shafts and at least one belt therebetween.

It is to be meant that what is discussed hereinafter can be applied even to a synchronous transmission of other type, for example a transmission which uses pinion - chain - toothed wheel.

In particular, the invention relates to the specific case wherein the primary shaft has at least one toothed wheel, which transmits the motion to said driven shaft, assembled on a free wheel arranged on the primary shaft.

Generally, this scheme is used in the so-called CVT (Continuously Variable Transmission) gearboxes or continuously automatic gearboxes, wherein the motion transmission is not of synchronized type, but is involves clutches as the transmission ratio variation implements by varying the race circumference of a belt on two pulleys with opposed conical surfaces, both in gearboxes of synchronous type, which guarantee a number of predetermined mechanically speed ratios and a synchronization mechanism allowing to perform the speed change by acting on clutch devices which provide to activate the actual transmission between two input and output pulleys, on the driven shaft.

In order to implement the passage from a speed to the other one, the assembly of one or more pulleys on the driven shaft on free wheels can be provided, so that they can rotate if they do not participate in the motion transmission.

However, this can remove, in particular in high gears, the engine brake effect during descending or at high speed, by making more difficult the vehicle control.

US 4,505,352 A discloses a synchronized transmission using a primary shaft intorposed between a crankshaft and a driven shaft, the primary shaft having a tothed wheel, transmitting the motion to the driven shaft, assembled on a free wheel, i.e. a one-way clutch, wherein the reversibility of the free wheel cannot be excluded.

The technical problem underlying the present invention is to provide a synchronized transmission allowing to obviate the drawback mentioned with reference to the known art.

Such problem is solved by a synchronized transmission as specified in appended claim 1.

The main advantage of the synchronized transmission according to the present invention lies in the fact of allowing a greater vehicle control thanks to the engine brake effect even at high speeds.

The present invention will be described hereinafter according to a preferred embodiment example thereof, provided by way of example and not for limitative purposes by referring to the enclosed drawings wherein:
* figure 1 shows a side raised view of a scooter incorporating the transmission according to the present invention; and
* figure 2 shows a perspective view of the transmission of figure 1, closed in its container, and of the relative engine block.
* figure 3 shows an axonometry view of a synchronized transmission according to the present invention, incorporating a synchronizer according the invention at the rear wheel of a motorcycle;
* figure 4 shows a diametral cross section view of an example of axial actuation synchronizer;
* figure 5 shows another diametral cross section view of the axial actuation synchronizer of figure 1, with some enlarged components; and
* figure 6 illustrates the actuation of the axial actuation synchronizer of figure 4, and the related motion transmission.

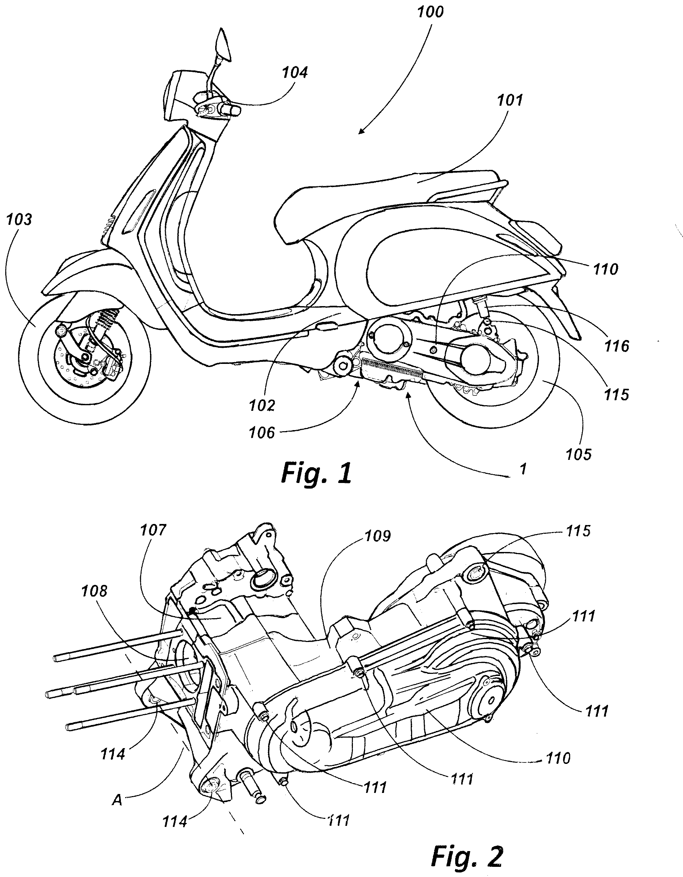

By referring to figures 1 and 2, a motorcycle, and in particular a scooter, is designated as a whole with 100. The invention relates the field of the saddle vehicles, or vehicles which are driven astride, generally, with two, three or four wheels, with particular reference to the scooters having a propulsion unit arranged in a position below a saddle 101, inside a chassis 102 which here is represented laterally, extending from a front wheel 103, driven by a handlebar 104 to a rear driving wheel 105.

The propulsion unit 106 (figure 2) or, in short, the engine is of the type having one or more cylinders arranged in a tilted position approximatively on the median plane of the vehicle which corresponds to the rotation plane of the two wheels during the rectilinear forward motion.

The engine 106 has un engine block 107 in one single piece which receives, in the present embodiment example, a cylinder 108 and a related (not visible) piston.

The piston acting in in said cylinder 108 is connected to a crankshaft 2 positioned transversally and perpendicularly to said median plane. On a represented side (figures 1 and 2) of the scooter 100 a transmission device 200 or, more shortly, a transmission of the motion from the crankshaft to the hub of the rear wheel 105 is provided.

The transmission 1 has a container 109 which receives inside thereof the transmission elements which will be described in greater details hereinafter. The container 109 is connected to the engine block 107 by creating a tunnel-like casing which includes the crankshaft 202 and all the transmission elements connected thereto.

Moreover, the container 109, on the exposed side of the motorcycle 100, is closed by a cover 110 of the transmission 1, which extends substantially from the engine 106 to the hug shaft of the driving wheel 105. The cover 110 is fastened to the container 109 by suitable bolts 111. Openings, slits, air inlets could be provided to access and/or cool down the transmission elements through said cover 110.

The cover 110 is rested upon a fastening edge 112 of the container 109, provided with fastening seats 113 for said bolts 111 and with additional front connection seat 114, with a hinge connection of axis A to allow the engine block 107 and the transmission 200 to swing, and rear connection seat 115, connected to a rear suspension 116, for connecting the casing 109 and the whole transmission 1 to the frame of the vehicle 100.

Such transmission 200 is of the multiple speed type and of synchronous type, and it is prearranged for connecting the crankshaft 202, which receives the motion from the motion of one or more pistons, to the hub shaft 205, by taking into consideration that these two shafts are parallel therebetween and placed at a pre-fixed distance. The hub shaft, at one distal end thereof, is equipped with a pinion for connecting to the rear wheel 105.

They are both perpendicular to the median plane of the vehicle, defined by the rotation plane of the front and rear wheels. It is further meant that the use of this type of transmission is not limited to the herein represented two-wheel scooter, but it can be extended to a scooter with a pair of front wheels or to four-wheel scooters.

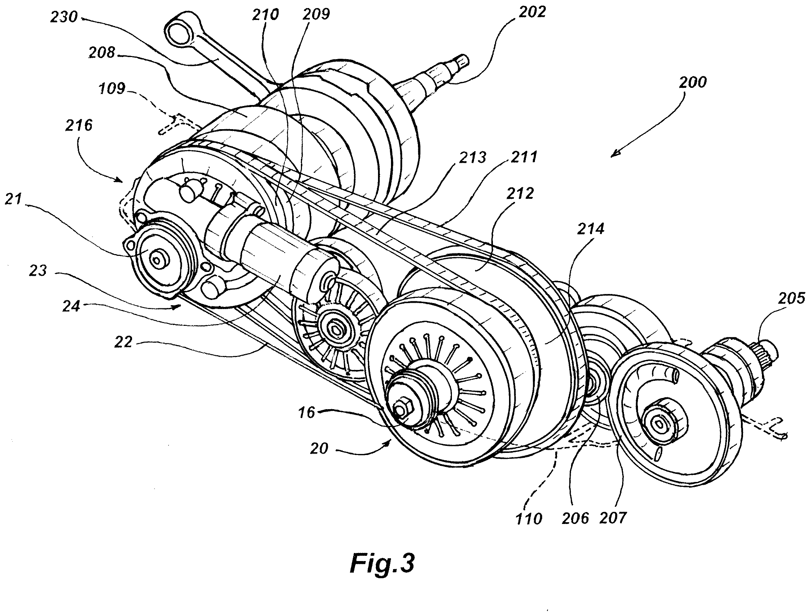

By referring instead to figure 3, a multiple gearbox without casing 109 and the cover 110, in particular a transmission with four-gear shift, is designated a whole with 200. It is of the type suitable to be assembled on a motorcycle as transmission element which actuates a driving wheel of the motorcycle, in particular a scooter, that is the rear wheel thereof 105.

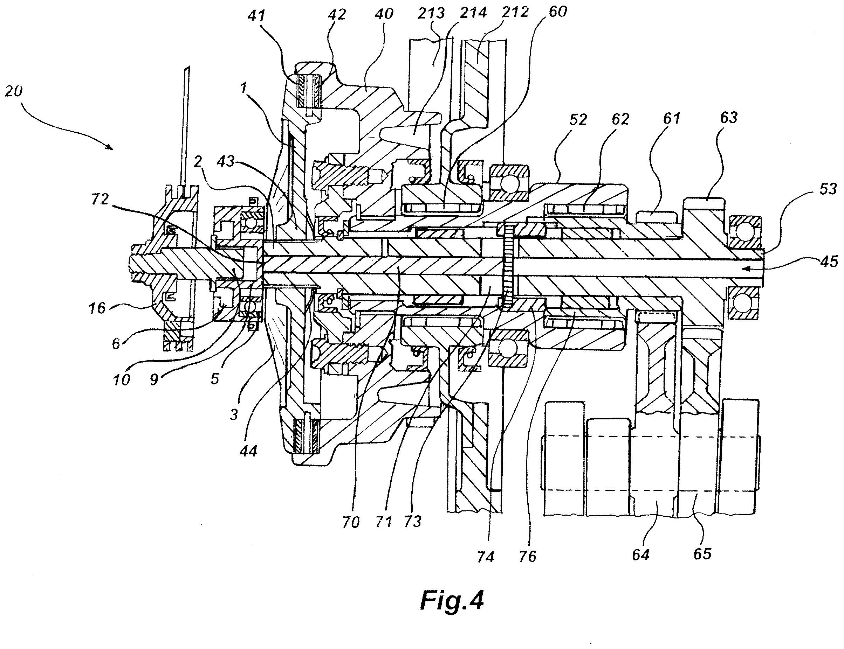

On this regard, it comprises a crankshaft 202, which is made to rotated by the engine, the piston rod 230 thereof is represented, and a first driven shaft, that is the primary shaft 53 (figure 4), and a secondary shaft, which can be connected directly to the wheel or which transmits the rotation, as in the present embodiment example, to a hub shaft 205 which is connected to the driving wheel 105 of the vehicle and it is the driven shaft of the vehicle.

It is to be noted that the arrangement of the shafts is to that the crankshaft 202 assumes a position which is substantially parallel to the rotation axis of the driving wheel, that is to the hub shaft 205. Therefore, this transmission element has the purpose of transferring the motion from an engine, having a crankshaft transversal to the motorcycle, to a wheel having an axis transversal to the vehicle, too.

The passage from secondary shaft to hub shaft 5 takes place through a pair of gearings 206, 207 which have the function of inverting the rotation direction transmitted to the driving wheel, which in this case is concurrent to the rotation direction of the crankshaft 202, and they introduce a fixed reduction ratio on the hub.

It is to be meant that the hub shaft 205 could be constituted by the same secondary shaft, provided that one renounces to the above mentioned reduction ratio on the hub and providing to invert the rotation direction of the crankshaft 202.

In the light of what above, in each case the secondary shaft is directly or indirectly connected, from the mechanical point of view, to the driving wheel 105 thereto the gearbox refers.

The crankshaft 202 e the primary shaft 53 are substantially parallel and they are connected by transmission elements which allow the motion transmission according to different speed ratios. Such transmission elements include a first group of toothed pulleys assembled on the crankshaft 202, a second group of toothed pulleys assembled at the primary shaft 53, and a pair of transmission belts extending from the first to the second group of pulleys.

Under transmission belt any flexible annular element is meant apt to transmit the motion between two pulleys offset therebetween, in particular with axes parallel therebetween. The transmission belts then include any kind of belts or chains, the pulleys in case could be toothed to implement a synchronous connection.

In the present embodiment example, the transmission belts advantageously are synchronous transmission belts; under synchronous belt a belt, usually a toothed belt or a roller chain, is meant which transmits the motion from a wheel or toothed pulley to another wheel or toothed pulley with a transmission ratio which is determined by the ratio between the diameters of the wheels, without it is subjected to clutch or sliding losses.

However, generally, the herein described transmission is of the synchronous or almost synchronous type, and it uses a pair of pulleys connected kinematically by a belt, preferably a toothed belt on toothed pulleys or a high performance belt, for example of the Stretch Fit^{®} type or the like.

It is to be meant that what described hereinafter can be wholly or partially applied even to an equivalent synchronous transmission of other type, for example a pinion - chain - toothed wheel transmission.

The absence of sliding portions and/or portions dragged by friction, typical instead of the gearboxes of CVT (*Continuously variable transmission*) type, even known as continuous transmissions or continuous variators, makes the herein described gearbox of synchronous type.

Therefore, in the present embodiment example as well as in the subsequent ones, the above-mentioned pulleys are toothed pulleys, connected by toothed belts, preferably of the type made of rubber.

On the crankshaft 202 a main starting clutch 208 is assembled which, in the present example, is of centrifugal type, well known in the art. In this example, this kind of clutch allows the motion transmission from the crankshaft 202 to the cascaded transmission elements, and it engages automatically at a rotation regime comprised in a prefixed range, for example between 1000 and 2000 revolutions per minute. At a lower rotation regime, the clutch 208 is not engaged and the engine is idle, whereas the driving wheel is not stressed.

However, it is meant that, in particular applications, this type of clutch can be replaced by a manual coupling clutch which is perfectly equivalent, or by a clutch actuated by a servo-mechanism.

On the crankshaft 202 a first pulley 209 and a second pulley 210 are keyed in cascade to said clutch 8. They are respectively connected, by means of a first synchronous belt 211, to a third pulley 212 and, by means of a second synchronous belt 213, to a fourth pulley 214.

At the front of the crankshaft 202, there is a first synchronizer 216 for synchronizing the second belt 213, that is the connection between second and fourth pulley 210, 214, whereas at the front of the primary shaft 53 there is a second synchronizer 20 which synchronizes the toothed wheels keyed on such primary shaft 53.

In fact, a first and a second toothed wheel are keyed on the primary shaft 53 which are engaged, respectively, with a third toothed wheel and with a fourth toothed wheel, both keyed on the secondary shaft. The third toothed wheel, in this embodiment example, is assembled on a second free wheel.

When the clutch 208 is activated so that it transmits the motion through the crankshaft 202, the two synchronizers 216, 20 are not active and the first speed is transmitted through the first and the third pulley 209, 212 and the first belt 211.

At a particular moment, which can be decided by the driver or autonomously set by the system, according to a well precise implemented logic, the system is requested to pass from the first to the second speed and, even in this case, the transmission uses the first synchronous belt 211.

In this case, however, the second actuated synchronizer 20, arranged on the primary shaft, is activated, and so it intervenes by synchronizing a pair of toothed wheels assigned to the transmission of the second and of the fourth gear.

At a particular moment, which can be decided by the driver or autonomously set by the system, according to a well precise implemented logic, the system is requested to pass from the second to the third speed and, in this case, the transmission has to use the second synchronous belt 213.

The first synchronizer 216 placed onto the crankshaft 202 is activated, by implementing the synchronization of the second pulley 210 of the third and of fourth gear. In the latter case, the second synchronous belt 213, now placed in motion, transmits the motion to the primary shaft of the gearbox. As the two belts 211, 213 are moving contemporarily, the primary shaft 53 would have two different speeds set by the transmission, however this is avoided by the presence of a free wheel which allows to disengage the third pulley 213 related to the first and second gear.

However, in the same moment, on the driven shaft, the second synchronizer 20 on the primary shaft 3 has to be deactivated, so as to cease the synchronization of the ratio of toothed wheels of second and fourth gear. Therefore, the motion reaches the primary shaft through the pair of pulleys related to the third and fourth gear, and the primary shaft rotates with the speed set by the third gear.

It is to be noted that the synchronizer has to be deactivated independently from the rotation speed reached by the respective primary shaft, and this makes that it has to be of actuated type, that is of the type which is actuated or deactivated after an actuation determined by a system decision and not by simply reaching a rotation regime.

As last case the insertion of the fourth speed remains: as to the first synchronizer 216 on the crankshaft nothing changes with respect to the case of the third gear. In fact, the second belt 213 between the second and the fourth pulley 210, 214 continues to be active.

However, for the fourth gear, even the second synchronizer 20 has to intervene which is actuated on the primary shaft 53, by synchronizing again a pair of toothed wheels belonging to the second and fourth gear.

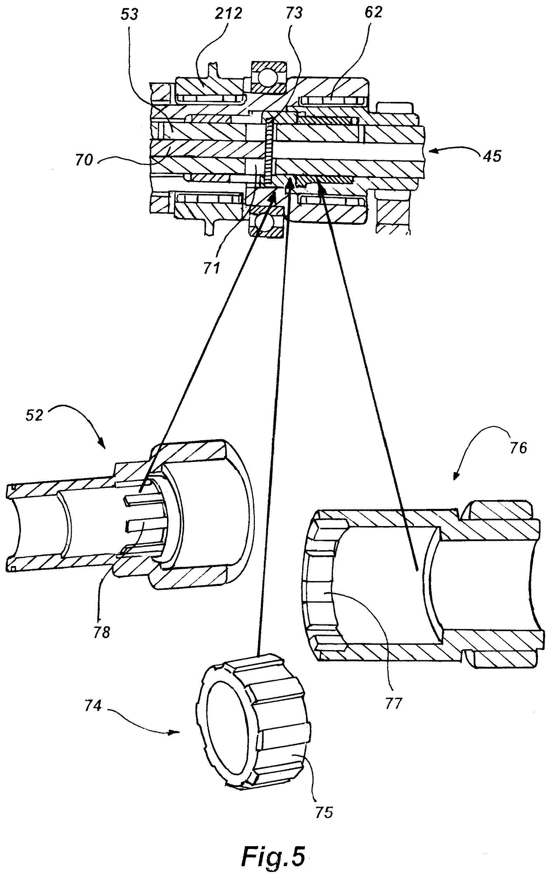

By referring to figures 4 to 6, an axial actuation synchronizer according to the invention is designated as a whole with 20, as in the previous figures wherein it is shown as second synchronizer of a transmission 200. However, it is to be meant that what described can be applied to any synchronizer acting on a driven shaft.

It comprises a supporting plate 1 which, together with a disc-pushing element 40 shaped like a cup, defines a space included therein. The plate 1 covers a wide central opening of the disc-pushing element 40 and it has a central hole. Between plate 1 and disc-pushing element 40 there are clutch discs 41, 42.

The synchronizer 20 comprises an actuation axis, constituted by a shaft 53 which, in the transmission described previously, is a primary driven shaft, having a proximal actuation end 2 inserted internally in the central hole of the plate 1, and it is hollow internally, having a through channel 45 inside thereof. The shaft is included in a tubular element 52 the proximal end thereof is faced towards said central hole of the supporting plate 1 of the synchronizer 20. The tubular element 52 is connected to the disc-pushing element 40.

The rotating shaft 53 extends from the supporting plate 1 and it crosses the remaining portion of the transmission elements which will be now described.

The synchronizer 20 comprises a bell-like spring 3 which is substantially shaped like a cone, implemented by a metal sheaf wherein through slots are made allowing to deform the spring according to an axial direction.

It has then the shape of a conical disc and the periphery thereof is rested upon the outer edge of the supporting plate 1, so as to cover wholly the central opening of the disc-pushing element 40; the conical end of the bell-like spring 3 has a central opening with a circular edge thereon a ball bearing 5 is fastened which acts as platform for assembling a cam 6, fastened outside the spring 3, the function thereof is to translate axially opposed to the elastic resistance offered by the spring 3, so as to interfere with the edge 43 of the central hole of the supporting plate 1 and with the actuation end of the shaft 53, as well as on the spring 3 which pushes the supporting plate by determining the closure of the clutch discs 41, 42.

On this regard, between the plate 1 and the actuation end 2 of the shaft 53 there is a leaf spring 44 which guarantees the elastic return of the plate 1 in the starting position thereof when it is no more stressed (figure 4).

The cam 6 is substantially shaped like a disc and it has a cam profile defined on a peripheral circumference arc thereof, formed by a raised rib, as well as a second cam profile determined by the flat surface of the exposed face thereof, the two profiles being connected to the respective ends by tilted surfaces.

The disc of the cam 6 forms a plane, corresponding to said exposed face, perpendicular to the axis of the synchronizer 20, and the first cam profile 8 projects perpendicularly from said plane, in axial direction.

The cam 6 has a centering hole wherein an actuation spindle 10 with a plug connection is inserted, allowing the rotation of the cam 6 by rotating said spindle 10.

A corresponding cam follower 9, assembled on said spindle 10 the axis thereof coincides with the axis of the actuation shaft 53, is associated to the above-mentioned cam 6.

The cam follower 9 comprises a ring apt to couple with said cam 6, on the exposed face thereof a second cam profile is formed which projects axially and which is intended to couple with said first cam profile of the cam 6. On this regard it will comprise a raised cam surface, a lowered cam surface and related tilted connections.

At the opposite distal end, the actuation spindle 10 comprises a control wheel 16 which is useful to rotate the cam 6 with respect to the cam follower 9, thus determining the translation of the cam 6 and, consequently, of the actuation end 2 and of the shaft 53.

The control wheel 16 in turn is controlled in rotation by a clutch pulley 21, arranged at the first synchronizer 216, at the crankshaft 202. The control wheel 16 and the clutch pulley have a clutch annular belt 22 connecting them.

The clutch pulley 21 is controlled in rotation by a gear-selecting device 23 which includes an electric motor 24 suitably controlled by a control unit or in case through a manual control.

Therefore, a half-rotation of the cam 6 determines its own translation, in one direction or in the other one, with respect to the cam follower 6, of the bearing 5 and of the bell-like spring 3, and then of the actuation end 2.

On this regard, the synchronizer 20 comprises means for rotating selectively said rotating cam, represented in figure 3 and implemented, in the present example, by the control wheel 16, the clutch pulley 21, the clutch belt 22 and the selecting device 23.

The primary shaft 53 receives the motion from a third toothed pulley 212, connected to a corresponding first toothed belt 213, dragged by the crankshaft 202, and from a fourth pulley 214 analogous to the previous one, however assembled on a first free wheel 60, dragged by a corresponding first toothed belt 211.

Also a pair formed by a first toothed wheel 61, in turn assembled on a second free wheel 62, and by a second toothed wheel 63, which transmits the motion only if synchronized, is keyed on the primary shaft 53, as it will become clear hereinafter.

It is to be noted that the toothed wheels 61, 63 will be intended to transmit the motion to respective driven wheels 64, 65 with different transmission ratios.

Since the cam 6 does not exert a pressure towards the actuation end 2 with respect to the cam follower 9, the motion path provides the direct passage from the first pulley 212 to the first toothed wheel 61 through the tubular element 52 which rotates on the primary shaft 53.

On the contrary, when the cam 6 exerts a pressure, by operating the clutch constituted by the clutch discs 41, 42, the disc-pushing element 40 drags in rotation the tubular element 52 which synchronizes the second toothed wheel 63. Due to the effect of the higher number of revolutions the second free wheel 62 excludes the first toothed wheel 61 and the motion is transmitted through the second toothed wheel 63.

An additional half-rotation of the actuation shaft 10 brings back the gearbox in the preceding situation.

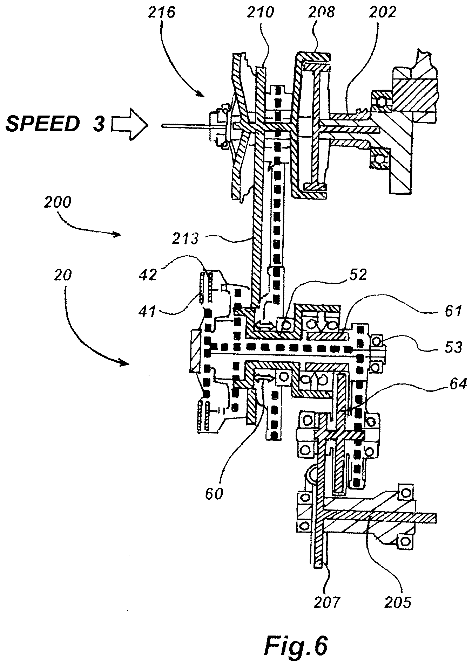

On the contrary, when the third speed is engaged, the motion is transmitted from the crankshaft 202 by the second pulley 210, the most external one (figure 3), through the second belt 213, the fourth pulley 214, the tubular element 52 and the first toothed wheel 61, to the third toothed wheel 64 which is assembled on a secondary shaft which transmits the motion to the driven shaft 205 (figure 6) .

In this case, the first free wheel 60 is engaged then it transmits the motion along the above-described transmission path.

However, in the situations wherein the motion should have contrary direction, then coming from the wheel 105, as upon descending, the free wheel itself would disengage and there would be no engine brake effect.

On this regard, in the through channel 45 of the primary shaft 53 a stem 70 is inserted extending from the actuation proximal end 2 as far as a slit 71 made through the primary shaft 53 in the tract comprised between the third pulley 212, that is the area wherein the pulleys transmit the motion to the primary shaft, to the second free wheel 62, that is the area wherein the toothed wheels transfer the motion to the secondary shaft.

The stem 70 then has a pushing end 72, at the actuation proximal end 2, and, on the opposite end, a thrust plate 73 projecting from said slit 71.

At the slit 71, a clutch bushing 74 is provided which is put outside the primary shaft 53, between it and the tubular element 52; it has outer teeth 75.

The clutch bushing 74 then is intended to slide on the primary shaft 53 pushed by the thrust plate 73 and by the stem 70, which in turn receives the related actuation from the previously described cam 6, or from another cam mechanism. Clutch bushing 74 and plate 73 are connected one another.

The outer axial teeth 75 are in toothed engagement with the tubular element 52 by means of first inner axial teeth 78 of the latter, formed on the inner surface thereof faced towards the clutch bushing 74, with respect thereto the clutch bushing 74 slides.

At last, on the primary shaft 53 a driven bushing 76 is provided, still arranged external to the shaft, thereon said second free wheel 62 is assembled, that is the free wheel thereon one of the toothed wheels which transmits the motion to the secondary shaft is assembled.

The driven bushing 76, at its own end faced towards said clutch bushing 74, an annular cavity wherein second outer axial teeth 77 are formed which are intended to engage with the outer teeth 75 of the clutch bushing 74.

This engagement, if implemented, makes integral the rotation of the two portions which otherwise would act as driving and driven with respect to the free wheel, substantially excluding the reversibility of the free wheel itself.

This clutch has to be performed after having engaged the third speed and after the step wherein the free wheel has started the motion transmission in the wished direction for the third gear, or more simply when the shafts are synchronized by now.

It is to be meant that the herein described clutch system has to be synchronized upon engaging the gears, but this is however guaranteed by the fact that the control of the synchronizer 20 however is phased with the gears.

It acts by means of an axial actuation which is controlled at one of the ends of the primary shaft, so as not to modify the geometry of the transmission components of such shaft.

Conveniently the actuation takes place on the same side of the synchronizer, and through the same cam mechanism which, still in axial direction, manages the speed change.

To the above-described synchronized transmission a person skilled in the art, with the purpose of satisfying additional and contingent needs, could introduce several additional modifications and variants, however all comprised within the protective scope of the present invention, as defined by the enclosed claims.

## Claims

1. A synchronized transmission (200) which can be used aboard a vehicle and in particular a motor vehicle, wherein the crankshaft (202) actuated by the engine (106) and the driven shaft, connected to a rear wheel (105), are substantially parallel therebetween, the driven shaft (205) receiving the motion from a a motion transmission tubular element (52) arranged on a
primary shaft (53) kinematically connected to the crankshaft (202), wherein the primary shaft (53) has at least one toothed wheel (61), freely rotating on the primary shaft (53), which transmits the motion to said driven shaft (205), and is arranged firmly rotating on a driven bushing (76), said driven bushing (76) being assembled freely rotating on the primary shaft (53), the primary shaft (53) comprising a passing-through axial channel (45) wherein an actuation stem (70) is inserted, comprising a clutch (74) actuated axially through said stem (70) and acting on said driven bushing (76) making said driven bushing (76) integral to said motion transmission tubular element (52), wherein said toothed wheel (61) is arranged on a free wheel (62) such that, when said clutch (74) is coupled with said driven bushing (76), the reversibility of the free wheel (62) is excluded.

2. The synchronized transmission (200) according to claim 1, wherein the primary shaft (53) has a slit (71) formed therethrough and arranged between said at least one toothed wheel (61) and the stem (70), said stem (70) having an actuation plate (73) projecting from said slit (73) to actuate the clutch.

3. The synchronized transmission (200) according to claim 1 or 2, wherein the stem (70) has a pushing end (72), at one end of the primary shaft (53), thereon a cam mechanism (6) acts for actuating said clutch.

4. The synchronized transmission (200) according to claim 3, wherein said cam mechanism (6) is phase-actuated upon actuating the gears.

5. The synchronized transmission (200) according to anyone of the preceding claims, wherein the clutch comprises a clutch bushing (74) which is put outside the primary shaft (53), between it and the motion transmission tubular element (52), which can slide on the primary shaft (53) by remaining engaged to said motion transmission element (52) by means of respective axial teeth (75, 78).

6. The synchronized transmission (200) according to claim 5, wherein said clutch bushing (74) engages with said driven bushing (76) by means of respective axial teeth (75, 77).

7. A motorcycle (100) comprising a propulsion unit (106) arranged in a position under a saddle (101), inside a chassis (102) extending from a front wheel (103) to a rear driving wheel (105), which comprises, between said propulsion unit (106) and said rear wheel (105) a transmission (200) of claim 5, received in a closed container (109), on an exposed side of the motor vehicle (100), by a cover (110).

## Patentansprüche

1. Synchronisiertes Getriebe (200), das an Bord eines Fahrzeugs, insbesondere eines Motorfahrzeugs, verwendet werden kann, wobei die vom Motor (106) angetriebene Kurbelwelle (202) und die mit einem Hinterrad (105) verbundene angetriebene Welle im Wesentlichen parallel zueinander verlaufen, wobei die angetriebene Welle (205) die Bewegung von einem rohrförmigen Bewegungsübertragungselement (52) erhält, das auf einer kinematisch mit der Kurbelwelle (202) verbundenen Hauptwelle (53) angeordnet ist, wobei die Hauptwelle (53) mindestens ein auf der Hauptwelle (53) frei drehbares Zahnrad (61) aufweist, das die Bewegung auf die angetriebene Welle (205) überträgt und fest drehbar auf einer angetriebenen Buchse (76) angeordnet ist, wobei die angetriebene Buchse (76) frei drehbar auf der Hauptwelle (53) montiert ist, die Hauptwelle (53) einen durchgehenden axialen Kanal (45) aufweist, in den ein Betätigungsschaft (70) eingesetzt ist, der eine Kupplung (74) umfasst, die axial durch den Schaft (70) betätigt wird und auf die angetriebene Buchse (76) einwirkt, wodurch die angetriebene Buchse (76) einteilig mit dem rohrförmigen Bewegungsübertragungselements (52) gemacht ist, wobei das Zahnrad (61) auf einem Freilauf (62) so angeordnet ist, dass, wenn die Kupplung (74) mit der angetriebenen Buchse (76) gekoppelt ist, die Umkehrbarkeit des Freilaufs (62) ausgeschlossen ist.

2. Synchronisiertes Getriebe (200) nach Anspruch 1, wobei die Hauptwelle (53) einen durch sie hindurchgehenden Schlitz (71) aufweist, der zwischen dem mindestens einen Zahnrad (61) und dem Schaft (70) angeordnet ist, wobei der Schaft (70) eine Betätigungsplatte (73) aufweist, die aus dem Schlitz (73) herausragt, um die Kupplung zu betätigen.

3. Synchronisiertes Getriebe (200) nach Anspruch 1 oder 2, wobei der Schaft (70) ein Druckende (72) an einem Ende der Hauptwelle (53) aufweist, auf das ein Nockenmechanismus (6) zur Betätigung der Kupplung wirkt.

4. Synchronisiertes Getriebe (200) nach Anspruch 3, wobei der Nockenmechanismus (6) bei Betätigung der Gänge phasengesteuert ist.

5. Synchronisiertes Getriebe (200) nach einem der vorhergehenden Ansprüche, wobei die Kupplung eine Kupplungsbuchse (74) umfasst, die außerhalb der Hauptwelle (53) zwischen dieser und dem rohrförmigen Bewegungsübertragungselement (52) platziert ist und auf der Hauptwelle (53) gleiten kann, indem sie mit dem Bewegungsübertragungselement (52) mittels entsprechender axialer Zähne (75, 78) in Eingriff bleibt.

6. Synchronisiertes Getriebe (200) nach Anspruch 5, wobei die Kupplungsbuchse (74) mit der angetriebenen Buchse (76) mittels entsprechender axialer Zähne (75, 77) in Eingriff steht.

7. Motorrad (100) mit einer Vortriebseinheit (106), die in einer Position unter einem Sattel (101) innerhalb eines Fahrgestells (102) angeordnet ist, das sich von einem Vorderrad (103) zu einem hinteren Antriebsrad (105) erstreckt, und die zwischen der Vortriebseinheit (106) und dem Hinterrad (105) ein Getriebe (200) nach Anspruch 5 umfasst, das in einem geschlossenen Behälter (109) an einer freiliegenden Seite des Kraftfahrzeugs (100) durch eine Abdeckung (110) aufgenommen ist.

## Revendications

1. Transmission synchronisée (200) qui peut être utilisée à bord d'un véhicule et en particulier d'un véhicule à moteur, dans laquelle le vilebrequin (202) actionné par le moteur (106) et l'arbre entraîné, relié à une roue arrière (105), sont sensiblement parallèles entre eux, l'arbre entraîné (205) recevant le mouvement d'un élément tubulaire de transmission de mouvement (52) disposé sur un arbre primaire (53) relié cinématiquement au vilebrequin (202), dans laquelle l'arbre primaire (53) a au moins une roue dentée (61), tournant librement sur l'arbre primaire (53), qui transmet le mouvement audit arbre entraîné (205), et est disposée de manière fermement pivotante sur une douille entraînée (76), ladite douille entraînée (76) étant assemblée de manière librement pivotante sur l'arbre primaire (53), l'arbre primaire (53) comprenant un canal axial traversant (45) dans lequel une tige d'actionnement (70) est insérée, comprenant un embrayage (74) actionné axialement par l'intermédiaire de ladite tige (70) et agissant sur ladite douille entraînée (76), rendant ladite douille entraînée (76) solidaire dudit élément tubulaire de transmission de mouvement (52), dans laquelle ladite roue dentée (61) est disposée sur une roue libre (62) de telle sorte que, lorsque ledit embrayage (74) est couplé avec ladite douille entraînée (76), la réversibilité de la roue libre (62) est exclue.

2. Transmission synchronisée (200) selon la revendication 1, dans laquelle l'arbre primaire (53) a une fente (71) formée à travers celui-ci et agencée entre ladite au moins une roue dentée (61) et la tige (70), ladite tige (70) ayant une plaque d'actionnement (73) faisant saillie de ladite fente (73) pour actionner l'embrayage.

3. Transmission synchronisée (200) selon la revendication 1 ou 2, dans laquelle la tige (70) a une extrémité de poussée (72), à une extrémité de l'arbre primaire (53), sur laquelle un mécanisme de came (6) agit pour actionner ledit embrayage.

4. Transmission synchronisée (200) selon la revendication 3, dans laquelle ledit mécanisme de came (6) est actionné en phase lors de l'actionnement des engrenages.

5. Transmission synchronisée (200) selon l'une quelconque des revendications précédentes, dans laquelle l'embrayage comprend une douille d'embrayage (74) qui est placée à l'extérieur
de l'arbre primaire (53), entre celui-ci et l'élément tubulaire de transmission de mouvement (52), qui peut glisser sur l'arbre primaire (53) en restant engagée audit élément de transmission de mouvement (52) au moyen de dents axiales (75, 78) respectives.

6. Transmission synchronisée (200) selon la revendication 5, dans laquelle ladite douille d'embrayage (74) s'engage avec ladite douille entraînée (76) au moyen de dents axiales (75, 77) respectives.

7. Motocyclette (100) comprenant une unité de propulsion (106) agencée dans une position au-dessous d'une selle (101), à l'intérieur d'un châssis (102) s'étendant d'une roue avant (103) à une roue motrice arrière (105), qui comprend, entre ladite unité de propulsion (106) et ladite roue arrière (105) une transmission (200) selon la revendication 5, reçue dans un carter (109) fermé, sur un côté exposé de la motocyclette (100), par un capot (110).
